# EUROPEAN PATENT SPECIFICATION

(11) **EP 2 461 573 B1**
(45) Date of publication and mention of the grant of the patent: **12.02.2020**
(21) Application number: 11191791.0
(22) Date of filing: 02.12.2011
(51) Int. Cl.: H04N 5/232, G06F 3/048, H04N 5/225

(54) **Display control apparatus, display control method, program and storage medium**
Anzeigesteuerungsvorrichtung, Anzeigesteuerungsverfahren, Programm und Speichermedium
Appareil de contrôle d'affichage, procédé de contrôle d'affichage, programme et support de stockage

(30) Priority: 06.12.2010 JP 2010271952
(43) Date of publication of application: 06.06.2012
(73) Proprietor: Canon Kabushiki Kaisha, Tokyo 146-8501 (JP)
(72) Inventor: Ise, Toshimichi, Ohta-ku, Tokyo (JP); Ota, Tomohiro, Ohta-ku, Tokyo (JP)
(74) Representative: Uffindell, Christine Helen

(56) References cited:
- EP-A1- 2 133 791
- EP-A2- 2 003 530
- US-A1- 2001 004 269
- US-A1- 2010 039 402

## Description

### BACKGROUND OF THE INVENTION

### Field of the Invention

The present invention relates to a display control apparatus, display control method, program, and storage medium, particularly to operation mode switching control for a display control apparatus.

### Description of the Related Art

In recent years, the number of functions using a touch panel has been increasing together with the popularization of an information terminal including a touch panel that allows intuitive operations. A drawing function for enabling a desired picture to be drawn freehand on an LCD panel is one of the functions of using a touch panel. On the other hand, a display control apparatus such as a vari-angle monitor and slidable monitor in which the position of a body having a display unit is variable with respect to a body to be gripped is becoming popular.

Japanese Patent Laid-Open No. 2003-289349 has disclosed a clamshell-type portable telephone whose upper body and lower body are connected by a hinge portion and which allows freehand drawing by operating a touch panel.

Japanese Patent Laid-Open No. 2009-177836 has disclosed a technique for setting an operation mode upon power-on to an appropriate one of a capture mode, reproduction mode, USB mode, and power-off mode in accordance with a change in state of a display unit (touch panel) to reduce the load of switching the mode.

In Japanese Patent Laid-Open No. 2003-289349 described above, since the upper body and lower body are connected by the hinge portion to be pivotable, if, while gripping one body, a touch input operation is performed for the other body, the other body may rotate by pressure applied by the touch operation. This may make it impossible to draw a trajectory as the user wants when he/she performs freehand drawing by a touch operation. If the user performs freehand drawing while maintaining a positional relationship such that the gripped body can withstand the force applied by a touch operation, it is possible to avoid the above-mentioned inconvenience, which, however, is not mentioned.

Japanese Patent Laid-Open No. 2009-177836 has disclosed a technique of switching an operation mode to an appropriate one of a capture mode, reproduction mode, USB mode, and power-off mode in accordance with a change in state of a display unit. Japanese Patent Laid-Open No. 2009-177836, however, does not describe a technique of switching an operation mode to a mode suitable for a touch operation in accordance with a change in state of the display unit since the way a force applied by a touch operation acts in accordance with a change in state of the display unit is not considered.

US 2001/004269 A1 (SHIBATA JUNICHIRO [JP] ET AL) 21 June 2001 (2001-06-21) discloses a portable terminal with a main unit and a flip unit. The operation mode of the terminal is determined based on the positional relationship between the main unit and the flip unit.

EP 2 133 791 A1 (NINTENDO CO LTD [JP]) 16 December 2009 (2009-12-16) describes a handheld information processing apparatus having a lower housing and an upper housing connected to each other and capable of being opened or closed. The image displayed on a display device is changed in accordance with the opened or closed state of the housings.

US 2010/039402 A1 (OKAZAKI TAKASHI [JP]) 18 February 2010 (2010-02-18) discloses an information processing apparatus e.g. lens interchangeable single lens reflex digital camera, that switches the touch panel from touch input enabled state to touch input disabled state when the display enters an inactive state.

### SUMMARY OF THE INVENTION

The present invention has been made in consideration of the aforementioned problems, and realizes a technique which can start freehand drawing without performing a mode switching operation when a display unit is located at a position such that the positional relationship between the display unit and a body gripped by the user is stable with respect to a force applied by a touch operation.

In order to solve the aforementioned problems, the present invention provides a display control apparatus as specified in claims 1 to 12.

In order to solve the aforementioned problems, the present invention provides a display control method as specified in claim 13.

In order to solve the aforementioned problems, the present invention provides a program for causing a computer to function as each means of a display control apparatus according to any one of claims 1 to 12.

In order to solve the aforementioned problems, the present invention provides a computer-readable storage medium storing a program for causing a computer to function as each means of a display control apparatus according to any one of claims 1 to 12, as specified in claim 15.

According to the present invention, it is possible to readily start freehand drawing while reducing the load of a mode switching operation since a mode is automatically switched to a freehand drawing mode by only changing the state of a display unit to a state suitable for freehand drawing.

Further features of the present invention will become apparent from the following description of exemplary embodiments (with reference to the attached drawings).

### BRIEF DESCRIPTION OF THE DRAWINGS

Fig. 1A is a block diagram showing the configuration of a display control apparatus according to the first embodiment of the present invention;
Figs. 1B and 1C are views each showing the outer appearance of the display control apparatus according to the first embodiment of the present invention;
Fig. 2 is a view for explaining a change in positional relationship between a display unit and a body;
Figs. 3A to 3D are views for explaining the positional relationship between the display unit and the body;
Fig. 4A is a view showing an example of a freehand drawing operation when the display unit is in an open state;
Fig. 4B is a view showing an example of a freehand drawing operation when the display unit is in a reversed/closed state;
Figs. 5A to 5C are views showing examples of a screen on which drawing is in progress in a drawing mode;
Figs. 6A to 6D are views showing examples of a GUI screen in a normal capture mode and a drawing mode;
Figs. 7A to 7D are views showing examples of a GUI screen in a drawing mode;
Fig. 8 is a flowchart illustrating an operation during capture standby according to the embodiment; and
Figs. 9A and 9B are flowcharts illustrating an operation when a drawing mode starts according to the embodiment.

### DESCRIPTION OF THE EMBODIMENTS

Modes for carrying out the present invention will be described in detail below. Note that embodiments to be described below are merely examples for implementing the present invention, and should be modified or changed, as needed, in accordance with the configuration of an apparatus to which the present invention is applied and various conditions. The present invention, therefore, is not limited to the following embodiments. Parts of the respective embodiments (to be described later) may be combined.

### [First Embodiment]

A display control apparatus of the first embodiment will be explained below.

In this embodiment, when the positional relationship between a display unit and a main body gripped by the user (to also be called an operator) is changed to a state suitable for freehand drawing, a mode is automatically switched to a freehand drawing mode (to be referred to as a drawing mode hereinafter). In freehand drawing, in order for the user to draw a picture as he/she wants, the display unit needs to be located at a stable position where it does not accidentally move. The stability, however, varies depending on the shape of the apparatus, the orientation of the display unit, how the user grips the main body, and the like.

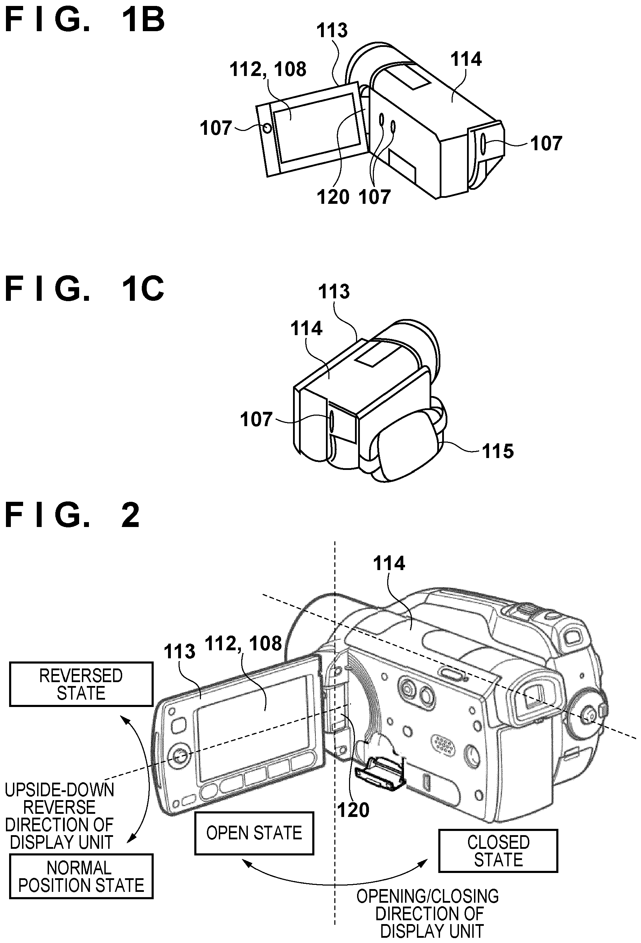

In this embodiment a digital video camera which has an outer appearance shown in Figs. 1B and 1C and has a "freehand drawing" function for an LCD panel will be described as an example of an apparatus to which the display control apparatus of the present invention is applied.

### <Configuration of Video Camera>

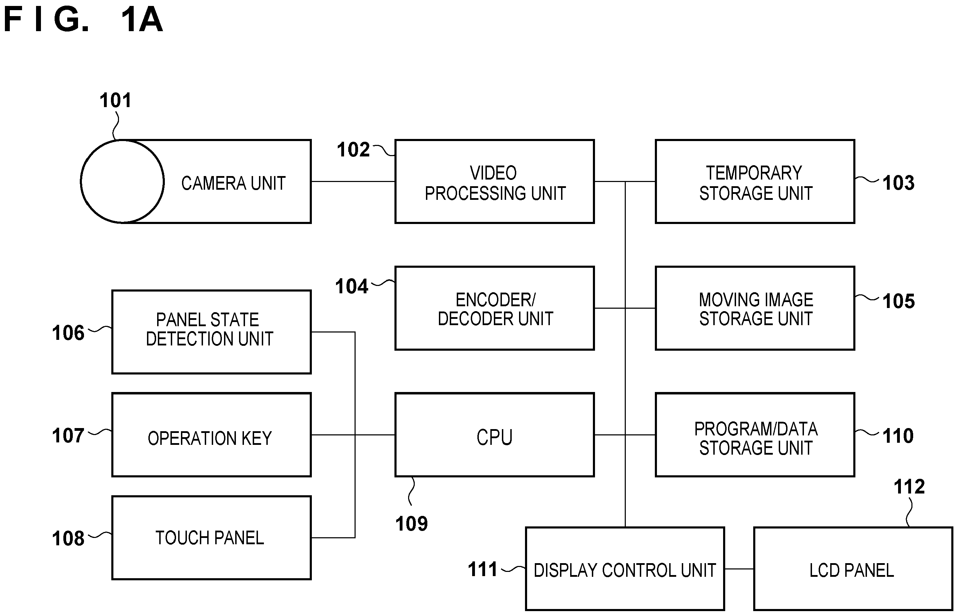

The configuration of a video camera according to the first embodiment will be described with reference to Fig. 1A.

Referring to Fig. 1A, a CPU 109 serves as an arithmetic processing unit which reads out a program from a program/data storage unit 110 and controls the operation of the video camera as a whole according to the program. The readout program has a function of causing the CPU 109 to execute a plurality of tasks in parallel, and the CPU 109 controls to perform a mode control task, a camera control task, a recorder control task, and a display control task. The CPU 109 for executing the display control task functions as a display control unit. Part of a temporary storage unit 103 functions as a work area for the CPU 109, and provides a moving image frame buffer and on-screen display (OSD) frame buffer to be described below.

A camera unit 101 generates an analog video signal by photoelectrically converting an object image. The camera unit 101 includes a photographing lens for imaging object light, an image sensor for photoelectrically converting an object image imaged by the photographing lens, and a circuit for driving the image sensor. A video processing unit 102 converts the analog video signal output from the camera unit 101 into a digital signal, and performs predetermined signal processing to generate moving image data. The above-mentioned camera control task executed by the CPU 109 controls the operation of the camera unit 101 and video processing unit 102.

An encoder/decoder unit 104 encodes the image data output from the video processing unit 102. The image data encoded by the encoder/decoder unit 104 is temporarily stored in the temporary storage unit 103, and then stored in a moving image storage unit 105 together with attached management data. The moving image storage unit 105 includes an internal memory such as a hard disk and flash memory, and a detachable recording medium such as a memory card.

To reproduce a moving image, the encoded moving data (to also be referred to as image data hereinafter) read out from the moving image storage unit 105 is decoded by the encoder/decoder unit 104 via the temporary storage unit 103, and expanded in the moving image frame buffer within the temporary storage unit 103. The above-mentioned recorder control task executed by the CPU 109 controls the encoder/decoder unit 104 and moving image storage unit 105.

The management data read out from the moving image storage unit 105 is used to generate OSD (On Screen Display) data, that is, characters and a Graphical User Interface (GUI) to be superimposed and displayed on a captured image or reproduced image. The generated OSD data is drawn in the OSD frame buffer within the temporary storage unit 103.

Contents of the moving image frame buffer and the OSD frame buffer are superimposed by a display control unit 111 and displayed on a touch panel type LCD panel 112.

The above-mentioned control task executed by the CPU 109 controls the OSD data, the display control unit 111, and the LCD panel 112.

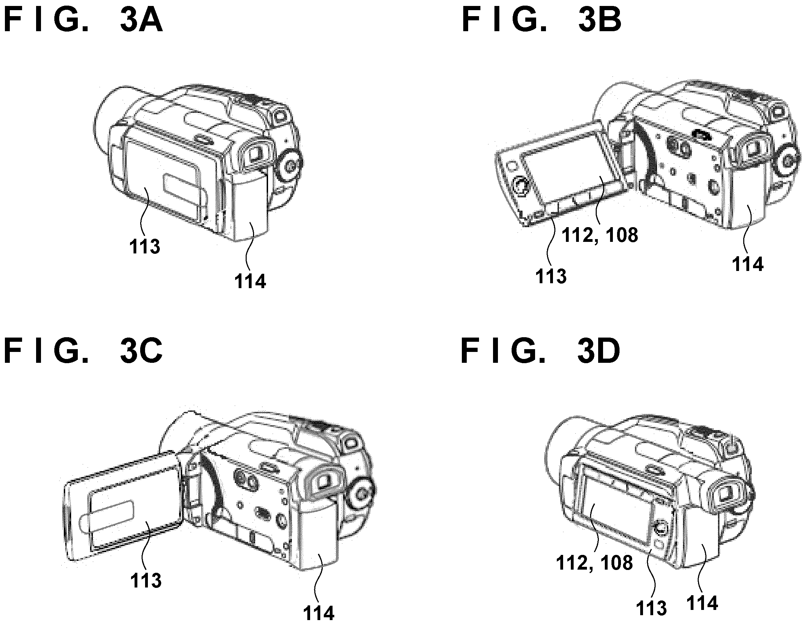

A panel state detection unit 106 detects whether a vari-angle LCD unit (to be referred to as a display unit hereinafter) 113 having, on its front surface, a touch panel 108 attached on the display surface of the LCD panel 112 has a given positional relationship (to be described later with reference to Figs. 2 and 3A to 3D) with respect to a main body 114, and outputs the detection result to the CPU 109.

An operation key 107 and the touch panel 108 of the display unit 113 serve as an operation unit for receiving a user operation instruction.

As shown in Figs. 1B and 1C, the video camera has the main body 114 with the camera unit 101, and the display unit 113 pivotably attached to the main body 114 by a hinge portion 120. A band-shaped grip portion 115 to grip the main body 114 is provided on one side surface of the main body 114 whose other side surface faces the display surface or rear surface of the display unit 113.

The LCD panel 112 and touch panel 108 are integrally formed, and built in the display unit 113. The touch panel 108 is formed so that, for example, its light transmittance is set not to inhibit display of the LCD panel 112. Input coordinates on the touch panel 108 correspond to display coordinates on the LCD panel 112. This forms a GUI such that the user feels as if he/she can directly operate a screen displayed on the LCD panel 112.

The CPU 109 can detect the following operations for the touch panel 108. That is, the CPU 109 can detect that a finger or pen has touched the touch panel 108 (to be referred to as a touchdown hereinafter), that a finger or pen is touching the touch panel 108 (to be referred to as a touchon hereinafter), that a finger or pen moves while touching the touch panel 108 (to be referred to as a move hereinafter), that a finger or pen which was touching the touch panel 108 has been removed (to be referred to as a touchup hereinafter), and that nothing touches the touch panel 108 (to be referred to as a touchoff hereinafter). The CPU 109 is notified of these operations and position coordinates on the touch panel 108 where a finger or pen is touching, and determines, based on the sent information, an operation performed on the touch panel 108.

For a move, a moving direction of the finger or pen moving on the touch panel 108 is also determined for each vertical component/horizontal component on the touch panel 108 based on a change in position coordinates. When a touchdown, a move, and then a touchup are performed on the touch panel 108, drawing of a stroke is determined. An operation of quickly drawing a stroke is called a flick. A flick means an operation of quickly moving a finger by a predetermined distance while touching the touch panel 108, and then removing the finger from it. In other words, a flick means an operation of quickly sliding a finger on the touch panel 108 as if the touch panel 108 is flicked by the finger. When it is detected that the user has moved his/her finger by a predetermined distance or longer at a predetermined speed or higher, and then a touchup is detected, it is determined that a flick has been performed.

If it is detected that the user has moved his/her finger by the predetermined distance or longer at a speed lower than the predetermined speed, it is determined that a drag operation has been performed.

The above-mentioned mode control task executed by the CPU 109 operates as follows. That is, the task transits the operation state of the video camera as a whole in response to an instruction from the operation unit (operation key 107 or touch panel 108), a request from another task, or a change in internal state managed by the task itself, and then notifies each task of an event.

A direction in which the display unit 113 is movable with respect to the main body 114 will be described with reference to Fig. 2.

Referring to Fig. 2, the display unit 113 can rotate about the hinge portion 120 (connection portion) in an opening/closing direction and an upside-down reverse direction with respect to the main body 114. The panel state detection unit 106 outputs a detection result to the CPU 109 by presuming, as an open state, a state in which the display unit 113 has been opened in the opening/closing direction by a predetermined angle or larger with respect to the main body 114, and presuming other states as a closed state. Furthermore, the panel state detection unit 106 outputs a detection result to the CPU 109 by presuming, as a reversed state, a state in which the display unit 113 has rotated in the upside-down reverse direction by a predetermined angle or larger, and presuming other states as a normal position state.

A panel state detection switch can detect at least positional relationships shown in Figs. 3A to 3D.

Normal Position/Closed State (Fig. 3A): The display unit 113 is in a normal position state and in a closed state. The display unit 113 is closed so that the display surface of the touch panel 108 (LCD panel 112) included in the display unit 113 faces the main body 114.

Normal Position/Open State (Fig. 3B): The display unit 113 is in a normal position state and in an open state. The display unit 113 is open by an angle of about 90° in the opening/closing direction with respect to the normal position/closed state. The display unit 113 has an orientation such that the display surface of the touch panel 108 (LCD panel 112) faces in a direction opposite to that of the capturing surface of the camera unit 101, and when an operator grips the grip portion 115 with the right hand, he/she can see the display surface of the touch panel 108 (LCD panel 112).

Reversed/Open State (Fig. 3C): The display unit 113 is in a reversed state and in an open state. The display unit 113 has rotated by an angle of about 180° in the upside-down reverse direction with respect to the normal position/open state.

The display unit 113 has an orientation such that the display surface of the display unit 113 faces in the same direction as that of the capturing surface of the camera unit 101, and when an operator grips the grip portion 115 with the right hand, the display surface of the display unit 113 can be seen from the object side, which means the operator can see the rear surface of the display unit 113. The display unit 113 is upside down with respect to the normal position/open state.

Reversed/Closed State (Fig. 3D): The display unit 113 is in a reversed state and in a closed state. The display unit 113 has been closed by rotating it by an angle of about 90° in the opening/closing direction with respect to the reversed/open state, the rear surface of the display unit 113 faces the main body 114, and the display surface is exposed.

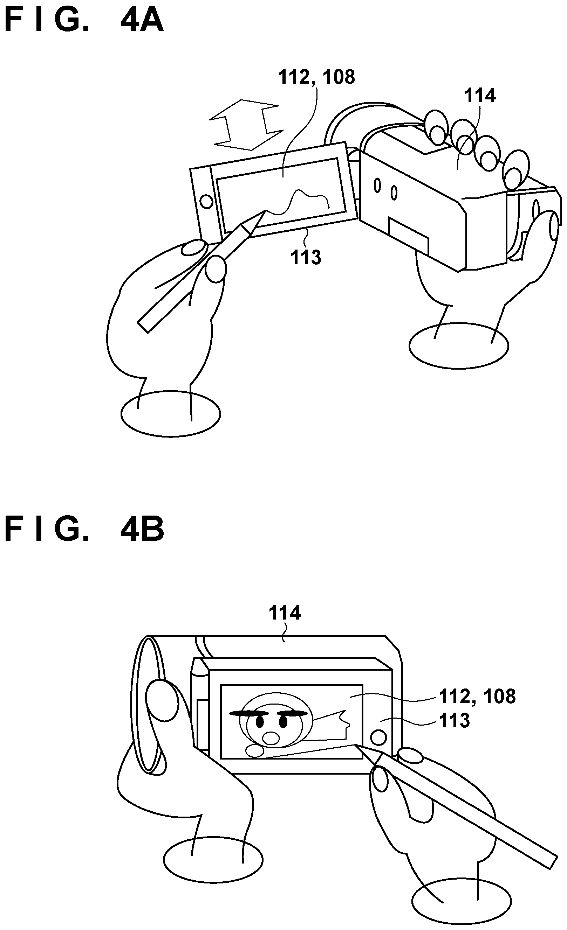

Drawing operations when the display unit is in an open state (Fig. 4A) and reversed/closed state (Fig. 4B) will be explained with reference to Figs. 4A and 4B, respectively.

Referring to Fig. 4A, the touch panel 108 is in an open state, and the user grips the main body 114 by putting the right hand through the grip portion 115. In this case, since a force in a direction opposite to that of a force applied to the display unit 113 by freehand drawing does not act, the orientation of the touch panel 108 is unstable. If a touch operation by freehand drawing and the like applies a force to the touch panel 108 in the direction substantially perpendicular to the display panel 108, the touch panel 108 may rotate about the hinge portion 120. As described above, when the touch panel 108 is unstable for a touch operation, a freehand-drawn line may be distorted. This is, thereforep, unsuitable for a touch operation which requires accuracy like freehand drawing. Furthermore, a typical video camera is often provided with the grip portion 115 for the right hand (right-hander). If the user grips the main body 114 by putting the right hand through the grip portion 115 as shown in Fig. 4A, the user has to perform freehand drawing with the left hand which is not his/her dominant hand. This is also unsuitable for a touch operation which requires accuracy like freehand drawing.

Referring to Fig. 4B, the touch panel 108 is in a reversed/closed state, and the user grips the main body 114 or grip portion 115 with the left hand. In this case, since a force acts from the main body 114 in a direction opposite to that of a force applied to the display unit 113 by freehand drawing, the touch panel 108 is stable. That is, even if a force is applied to the display unit 113 in the direction substantially perpendicular to the display unit 113, the rear surface of the display unit 113 abuts against the main body 114 held with the left hand, and therefore, the display unit 113 never rotates.

In the video camera of this embodiment, the touch panel 108 is stable in a reversed/closed state during freehand drawing, and thus this state is suitable for freehand drawing. However, it is troublesome for the user to set the display unit to a reversed/closed state suitable for freehand drawing and then switch to a freehand drawing mode. In this embodiment, therefore, when the state of the display unit 113 is changed to a reversed/closed state, an operation mode is automatically switched to a mode (drawing mode to be described later) in which the user can perform freehand drawing.

The video camera of this embodiment has a "drawing mode" as one of moving image capture modes. The "drawing mode" indicates a mode in which the user can draw and superimpose an arbitrary picture on a captured image. In the "drawing mode", the user can perform freehand drawing which allows the user to superimpose an arbitrary color pen having an arbitrary width or a stamp having an arbitrary shape at a touch on position. In the "drawing mode", the user can also perform touch animation input which allows the user to superimpose animation of a star- or musical note-shaped particle at a touch on position.

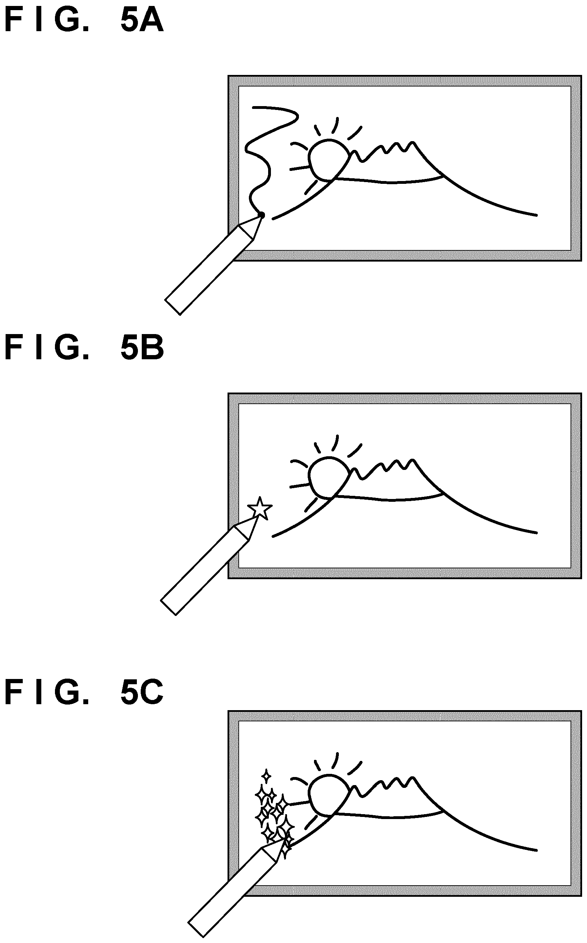

The above freehand drawing and touch animation input will be described in detail with reference to Figs. 5A to 5C. An input operation using an arbitrary color pen having an arbitrary width enables to draw a motion trajectory with a width and color corresponding to pen settings, as shown in Fig. 5A. An input operation using a stamp having an arbitrary shape enables to draw, at a touch position, a stamp set as shown in Fig. 5B. A touch animation input operation allows the user to draw a display object (particle) selected by the user around a touch position while producing motion, as shown in Fig. 5C. The touch animation input operation includes an operation of performing animation using a display object which covers the whole screen using a touch operation as a trigger.

As described with reference to Figs. 4A and 4B, when the display unit 113 is in an open state, the touch panel 108 is unstable. When the display unit 113 is in a reversed/closed state, the touch panel 108 is stable.

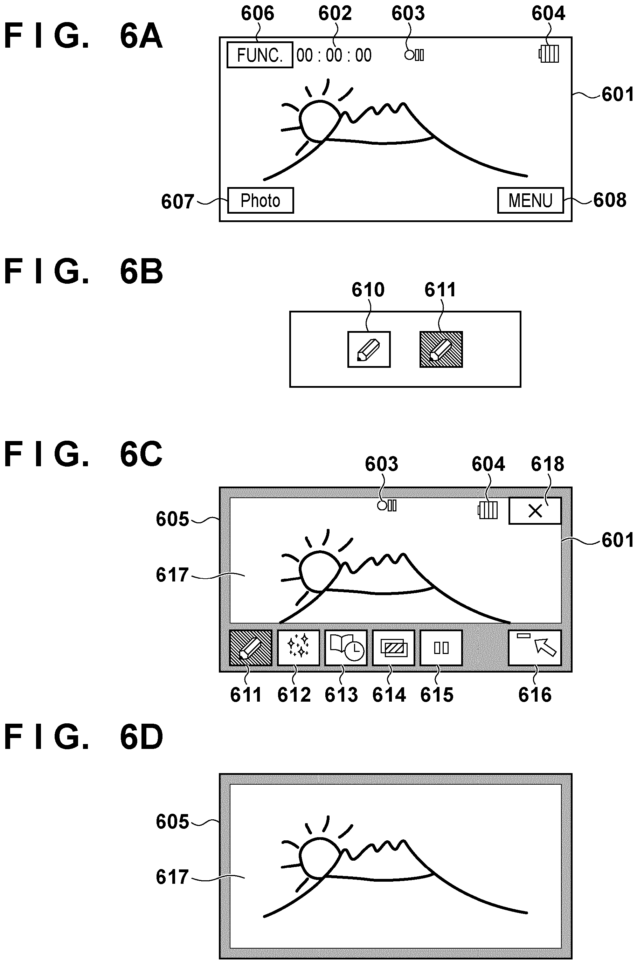

Fig. 6A shows a screen example displayed on the LCD panel 112 in a normal capture mode. Image capture time information 602, record state information (which indicates a state in which recording is currently performed or a record standby state) 603, and remaining battery information 604 for the video camera are displayed in the OSD on an upper portion of the LCD panel 112. A FUNC button 606, static image capture button 607, and menu button 608, all of which are touch-operable touch buttons are also displayed in the OSD on the LCD panel 112.

Fig. 6B shows freehand drawing setting buttons for setting a freehand drawing mode in this embodiment. A normal state button 610 indicates that the button is touchable and setting of the button is invalid. A selected state button 611 indicates that the button is touchable and setting of the button is valid. That is, the selected state button 611 is shown in a freehand drawing state, and the normal state button 610 is shown in a state other than the freehand drawing state.

Fig. 6C shows a drawing input selection screen example displayed on the LCD panel 112 in setting a freehand drawing mode. The record state information 603 and remaining battery information 604 for the video camera are displayed in the OSD on the upper portion of the LCD panel 112. The freehand drawing setting button 611, a touch animation button 612, a date/time superimposition setting button 613, an image mix button 614, a camera image freeze button 615, a reduce button 616, and a drawing mode end button 618, all of which are touch-operable touch buttons (display items) are also displayed in the OSD on the LCD panel 112.

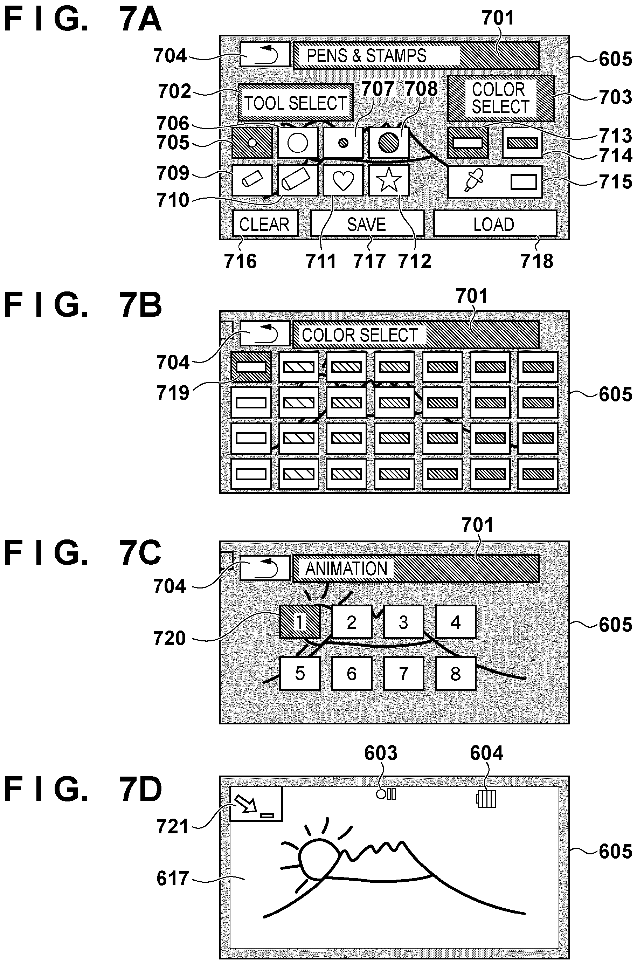

A function assigned to each button described above will now be explained in detail. The freehand drawing setting button 611 is used to transit to a freehand drawing setting screen (to be described later with reference to Fig. 7A). This button is selected in Fig. 6C, which means that the video camera is in a freehand drawing state.

The touch animation button 612 is used to transit to a touch animation setting screen (to be described later with reference to Fig. 7C). This button is in a normal state in Fig. 6C, which indicates that the video camera is not in a touch animation input state. The video camera of this embodiment has a function capable of recording a camera image (which is an image being captured by the camera unit 101, and is a through image during capture standby) with a date/time set in the main body superimposed, and the date/time superimposition setting button 613 is used to transit to a screen for setting this function. The video camera of this embodiment also has a function capable of superimposing an image saved in the main body or a memory card on a camera image and recording the thus obtained image, and the image mix button 614 is used to transit to a screen for setting this function. Furthermore, the video camera of this embodiment has a function capable of temporarily freezing a camera image and recording the state as a moving image, and the camera image freeze button 615 is touched to freeze a camera image. When the user touches the camera image freeze button 615 again while a camera image is frozen, the frozen state of the camera image is canceled. The reduce button 616 is used to transit to a drawing input selection item reduced state screen (to be described later with reference to Fig. 7D).

Referring to Fig. 6C, a touch detection ignored area 605 is also displayed in the OSD. The touch detection ignored area 605 indicates an area where it is ignored that a touch is detected in the area, which is displayed as a gray translucent area. In the video camera of this embodiment, since upper, lower, left, and right portions of the LCD panel 112 where erroneous detection of the touch panel 108 tends to occur are set as a touch detection ignored area, the touch detection ignored area 605 exists in the upper, lower, left, and right portions of the LCD panel 112, as shown in Fig. 6C. There exist the touch detection ignored area 605 and a drawing enabled area 617 indicating an area except for the buttons in Fig. 6C. According to a drawing input selected state in which the user touches the drawing enabled area 617, drawing is performed at touch coordinates. As will be described later, touching the drawing enabled area 617 on the screen of Fig. 6C transits to the screen (to be referred to as a screen displayed when drawing input is in progress hereinafter) of Fig. 6D. On the screen displayed when drawing input is in progress, an area except for the touch detection ignored area 605 is not displayed in the OSD so as to maximize a drawing area. The drawing enabled area 617, therefore, enlarges as shown in Fig. 6D.

Fig. 7A shows an example of a freehand drawing setting screen which is displayed on the LCD panel 112 in the freehand drawing setting. A title display area 701 indicating setting contents, a tool selection display area 702, and a color selection display area 703 are displayed in the OSD on the LCD panel 112. Furthermore, a return button 704, tool select buttons 705 to 712, color select buttons 713 to 715, an all clear button 716, a drawing screen save button 717, and a drawing screen load button 718, all of which are touch-operable touch buttons are displayed in the OSD on the LCD panel 112.

The function of each button shown in Fig. 7A will be described in detail next. In Fig. 7A, the return button 704 is touched to return to the freehand drawing selection screen shown in Fig. 6C. The user can select a pen or stamp shape for freehand drawing by touching the tool select buttons 705 to 712. Referring to Fig. 7A, the tool select button 705 is selected. If the user performs freehand drawing with the tool select button 705 selected, a motion trajectory is displayed in the OSD in a shape displayed on the tool select button 705 (for example, Fig. 5A). The tool select buttons 706 to 710 operate similarly to the tool select button 705. Since a shape displayed on the tool select button 706 is larger than that displayed on the tool select button 705, a thicker line is displayed in the OSD. A group of tiny particles is displayed on the tool select button 707. Therefore, if the user performs freehand drawing with the tool select button 707 selected, a line which looks like as if it were drawn by a paint brush is displayed in the OSD. By selecting the tool select button 708, a thick brush line as compared with the tool select button 707 is displayed in the OSD. The tool select buttons 709 and 710 respectively represent erasers having different sizes. If the user performs freehand drawing with the tool select button 709 or 710 selected, a colorless, transparent motion trajectory is displayed in the OSD. The tool select button 711 or 712 offers freehand drawing by a stamp, and is used to display, at a touch position in the OSD, the stamp having a shape displayed on the tool select button 711 or 712 (for example, Fig. 5B) .

The user can select color in performing freehand drawing using the color select buttons 713 to 715. Note that when the tool select button 709 or 710 is selected, a colorless, transparent motion trajectory is displayed, and therefore the user cannot select the color select buttons 713 to 715. Referring to Fig. 7A, the color select button 713 is selected. The color select button 713 indicates that the selected color is white. The color select button 714 indicates that selected color is black. The color select button 715 is used to transit to a screen for selecting a desired color, on which the currently selected color is displayed. The color select button 715 is touched to transit to a color selection screen shown in Fig. 7B. In Fig. 7B, the user can select a desired color. Referring to Fig. 7B, the return button 704, the title display area 701, a color select button 719, and buttons other than the return button 704 and the color select button are displayed in the OSD, and all the buttons are touch-operable touch buttons. Note that the color select button 719 indicates the selected color. In Fig. 7B, the return button 704 is touched to transit to the freehand drawing setting screen shown in Fig. 7A.

The all clear button 716 is used to erase all freehand-drawn pictures. When the user touches the all clear button 716, all pictures displayed in the OSD are erased (a colorless, transparent screen is obtained). The video camera of this embodiment has a function of saving a freehand-drawn picture displayed in the OSD, and loading a previously saved picture. When the user touches the drawing screen save button 717, the program/data storage unit 110 records a picture displayed in the OSD. When the user touches the drawing screen load button 718, a previously saved picture is loaded from the program/data storage unit 110, and displayed in the OSD.

Fig. 7C shows an example of a touch animation setting screen which is displayed on the LCD panel 112 in touch animation setting. The return button 704, the title display area 701, a touch animation select button 720, and buttons other than the return button 704 and the touch animation select button are displayed in the OSD on the LCD panel 112. All the buttons are touch-operable touch buttons.

The function of each button shown in Fig. 7C will be described in detail next. In Fig. 7C, the return button 704 is touched to return to the freehand drawing selection screen shown in Fig. 6C. In Fig. 7C, the user can select a desired touch animation select button. Referring to Fig. 7C, the touch animation select button 720 is selected. When the touch animation is selected and the screen returns to that shown in Fig. 6C, the touch animation button 612 has been selected.

Fig. 7D shows a screen which is displayed when the user touches the reduce button 616 in the freehand drawing selection screen shown in Fig. 6C, and in which the input selection items are reduced and the drawing enabled area 617 enlarges. The user, therefore, can draw a picture in the lower portion of the screen. An input selection item display button 721 is touched to return to the screen shown in Fig. 6C and display the input selection items.

Fig. 5A shows an example of a drawn picture displayed in the OSD in an input operation using an arbitrary color pen having an arbitrary width. Fig. 5B shows an example of a drawn picture displayed in the OSD in an input operation using an arbitrary stamp. Fig. 5C shows an example of a drawn picture displayed in the OSD in a touch animation input operation.

### <Mode Switching Processing>

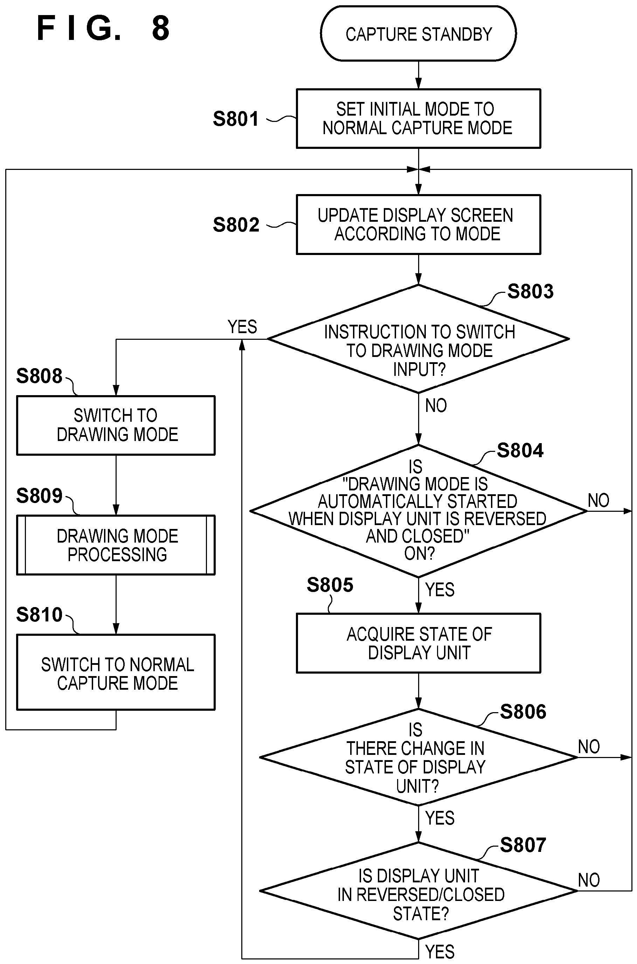

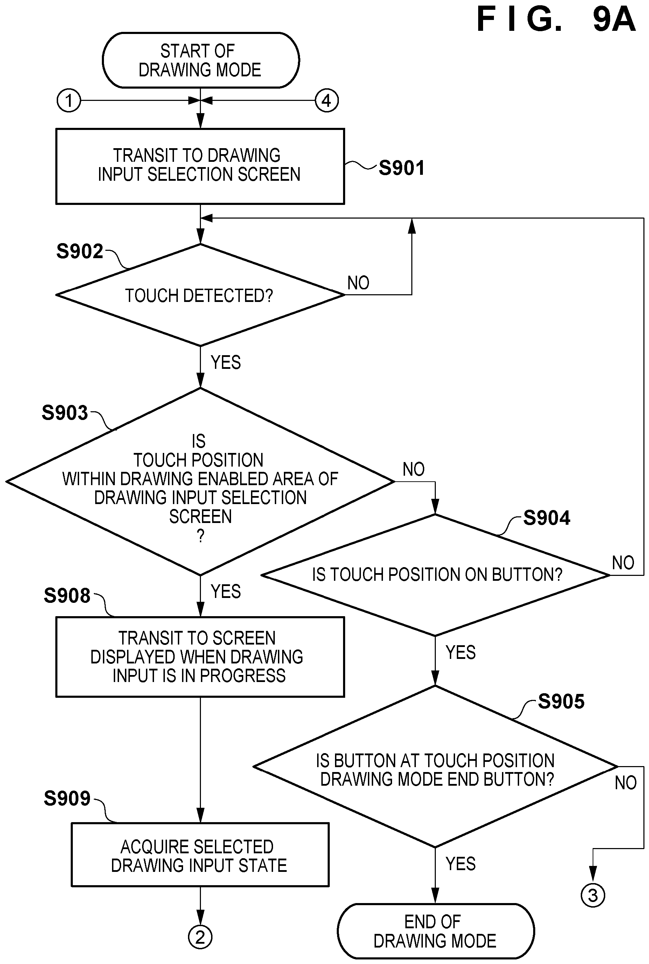

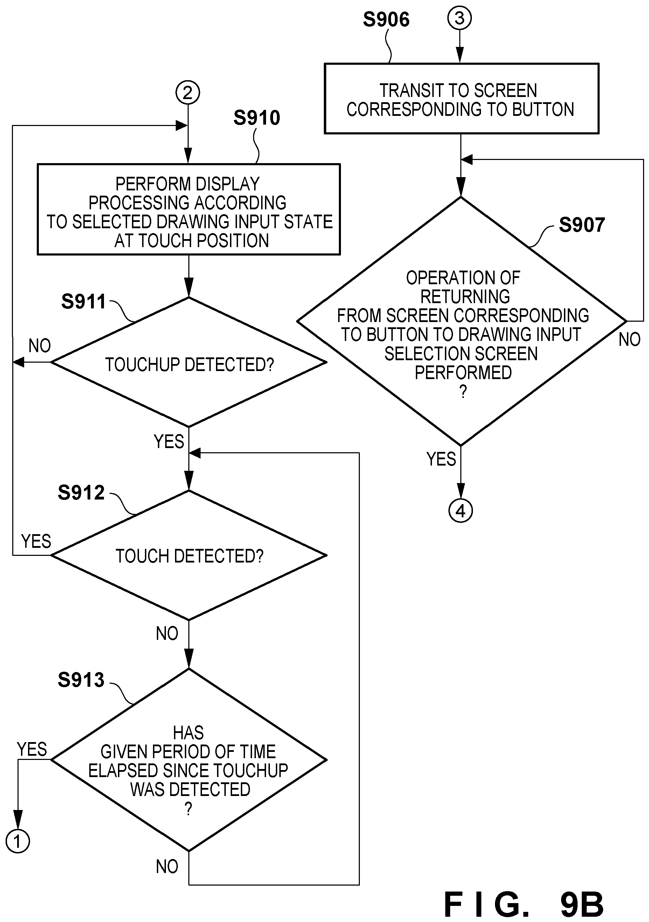

The operation of display control processing executed by the CPU 109 as a display control task and mode switching processing executed by the CPU 109 as a mode control task in this embodiment will be explained with reference to Figs. 8 and 9. These processes are implemented when the CPU 109 reads out programs from the program/data storage unit 110, and executes them.

Fig. 8 shows processing of automatically transiting to a drawing mode when the LCD panel is in a reversed/closed state during capture standby. In this embodiment, to prevent unnecessary mode switching, when the state of the LCD panel is changed to a reversed/closed state, switching to a drawing mode is not performed during display of a menu screen, display of a thumbnail image list, or recording of a moving image, but is performed only during capture standby.

When the video camera starts, and goes into a moving image capture mode, it enters a capture standby state, and then starts capture standby processing shown in Fig. 8.

In step S801, the CPU 109 makes initial settings, and the mode control task controls an initial moving image capture mode to be a normal capture mode.

In step S802, the display control unit 111 updates a displayed screen according to a moving image capture mode. If the mode is a normal capture mode, the screen shown in Fig. 6A is displayed on the LCD panel 112. Through display is performed on the LCD panel 112 to display, in real time, an image captured by the camera unit 101.

In step S803, the CPU 109 determines whether an instruction to switch to a drawing mode has been input. It is possible to input an instruction to switch to a drawing mode when the user touches the FUNC button 606 to open a FUNC menu screen during display of the screen in a normal capture mode in Fig. 6A, and then touches a drawing mode item of selection items displayed on the FUNC menu screen. If it is determined that an instruction to switch to a drawing mode has been input the process advances to step S808; otherwise, the process advances to step S804.

In step S804, the CPU 109 determines, based on information contents stored in the program/data storage unit 110, whether ON is set to automatically start a drawing mode when the LCD panel is reversed and closed. In this embodiment, it is possible to set, in advance in accordance with a user instruction, whether to automatically start a drawing mode when the display unit 113 is reversed and closed. This setting is made by operating, on a menu screen displayed by touching the menu button 608 during display of the screen in a normal capture mode in Fig. 6A, a setting item to set, when the panel is reversed, ON/OFF of drawing mode automatic start. The set content (ON or OFF) is stored in the program/data storage unit 110. If it is determined in step S804 that ON is set to automatically start a drawing mode when the LCD panel is reversed and closed, the process advances to step S805; otherwise, the process advances to step S802.

In step S805, the CPU 109 acquires the state of the LCD panel (the orientation and position of the display unit 113 with respect to the main body 114) from the panel state detection unit 106.

In step S806, the CPU 109 determines whether there is a change in state of the LCD panel acquired in step S805. If there is a change in state, the process advances to step S807; otherwise, the process returns to step S802 to repeat the processing.

In step S807, the CPU 109 determines whether the state of the LCD panel acquired in step S805 is a reversed/closed state. If the acquired state is a reversed/closed state, the process advances to step S808 to automatically switch to a drawing mode; otherwise, the process returns to step S802 to repeat the processing.

If the CPU 109 receives an instruction to switch to a drawing mode in step S803, or the state of the LCD panel is changed to a reversed/closed state in step S807, the mode control task controls the moving image capture mode to be a drawing mode in step S808.

Then, the screen in a drawing mode is displayed on the LCD panel 112.

In step S809, the CPU 109 performs drawing mode processing. The drawing mode processing will be described in detail later with reference to Figs. 9A and 9B. When the process exits (ends) the drawing mode processing, it advances to step S810.

In step S810, the CPU 109 causes the mode control task to control the moving image capture mode to be a normal capture mode.

Figs. 9A and 9B show the drawing mode processing in step S809 of Fig. 8.

Referring to Figs. 9A and 9B,, in step S901, the CPU 109 causes the mode control task to control to display a drawing input selection screen, thereby displaying the screen shown in Fig. 6C in the OSD.

In step S902, the CPU 109 determines whether the panel state detection unit 106 has detected a touch. If the unit 106 has detected a touch, the process advances to step S903; otherwise, a state is maintained until the unit 106 detects a touch.

In step S903, the CPU 109 determines whether coordinates touch-detected in step S902 are in the drawing enabled area 617 of Fig. 6C. If the coordinates are in the drawing enabled area 617, the process advances to step S908; otherwise, the process advances to step S904.

In step S904, the CPU 109 determines whether the coordinates touch-detected in step S902 are in the touch area of one of the touch buttons shown in Fig. 6C. If the coordinates are in the touch area, the process advances to step S905; otherwise, the process returns to step S902.

In step S905, the CPU 109 determines whether the coordinates touch-detected in step S902 are in the touch area of the drawing mode end button 618 shown in Fig. 6C. If the coordinates are in the touch area, the process ends the drawing mode; otherwise, the process advances to step S906. Even after the drawing mode ends, display objects drawn up to now (except for objects other than the display objects drawn by freehand drawing by the user) are not erased, and kept superimposed on the camera image. Particles are automatically erased when a predetermined period of time elapses.

In step S906, the CPU 109 executes processing when the user presses a button other than the drawing mode end button 618 shown in Fig. 6C, and the mode control task transits to a screen corresponding to the button (see description of Figs. 6A to 6D and 7A to 7D for screen transition).

In step S907, the CPU 109 determines whether the user has performed an operation of returning from the screen displayed in step S906 to the drawing input selection screen shown in Fig. 6C. If the user has performed an operation of returning to the drawing input selection screen, the CPU 109 executes the processing in step S901; otherwise, the CPU 109 maintains the state, and repeats the processing in step S907. Until YES is determined in step S907, the CPU 109 executes various processes receivable/executable on the screen.

If the coordinates touch-detected in step S902 are in the drawing enabled area 617 shown in Fig. 6C, in step S908 the CPU 109 causes the mode control task to transit to a screen displayed when drawing input is in progress as shown in Fig. 6C, and the process advances to step S909.

In step S909, the CPU 109 determines whether a selected drawing input state is a freehand drawing state or touch animation state, and acquires settings corresponding to each state. In a freehand drawing state, for example, the CPU 109 acquires information indicating which of the tool select buttons 705 to 712 shown in Fig. 7A is in a valid state and which of the color select buttons 713 to 715 is in a valid state. Similarly, in a touch animation input state, the CPU 109 acquires information indicating which touch animation is valid in Fig. 7C.

In step S910, the CPU 109 performs display processing (drawing) according to the drawing input state acquired in step S909 at the touch position acquired from the panel state detection unit 106. Then, the process advances to step S911. The display processing is performed to display pictures in the OSD as shown in Figs. 5A to 5C.

In step S911, the CPU 109 determines whether the panel state detection unit 106 has detected a touchup. If the unit 106 has not detected a touchup, the CPU 109 repeats the processing in step S910; otherwise, the process advances to step S912.

In step S912, the CPU 109 determines whether the panel state detection unit 106 has detected a touch. If the unit 106 has detected a touch, the process advances to step S910; otherwise, the process advances to step S913.

In step S913, the CPU 109 determines whether a given period of time has elapsed since a touchup was detected in step S911. The given period of time in this embodiment is, for example, 1 sec. If the given period of time has not elapsed, the process returns to step S912 to continue receiving a touch input operation; otherwise, the process returns to step S901 to transit to the drawing input selection screen. With this processing, even if a touch is not detected, the camera image is displayed without displaying the OSD such as touch buttons while the user is likely performing drawing, and therefore, the user can perform drawing in an arbitrary area except for the touch detection ignored area 605 in the camera image.

If the user instructs to start recording a moving image by pressing a moving image recording start button of the operation keys 107 at an arbitrary timing during the processing shown in Figs. 8 and 9, recording of a moving image captured by the camera unit 101 starts. If freehand drawing is in progress in a drawing mode at start of recording of a moving image, video data obtained by superimposing drawn display objects (lines, stamps, particles, and the like) on a captured camera image (object image) is recorded in the moving image storage unit 105 as a moving image.

According to this embodiment, in a normal capture mode, when the LCD panel 112 is reversed and closed, the mode is switched to a drawing mode to enter a freehand drawing state or touch animation input state. As described above, since a reversed/closed state in which the touch panel is stable is suitable for a drawing mode, it is possible to smoothly switch to a drawing mode, thereby enabling operation in a state suitable for a drawing mode. A trigger to end a drawing mode is only a touch operation of the drawing mode end button 618 in Figs. 9A and 9B. Therefore, once the mode is switched to a drawing mode, the video camera never exits the drawing mode according to the state of the LCD panel 112. That is, even if, in the display state shown in Fig. 6C, the position of the LCD panel 112 is changed to a position other than the reversed/closed position, the video camera continues the display state shown in Fig. 6C. Note that when the LCD panel 112 is reversed and closed in a normal capture mode and the normal capture mode is switched to a drawing mode, a freehand drawing enabled state may or may not have been already entered. The case where the normal capture mode is switched to the drawing mode but the freehand drawing enabled state has not been entered yet corresponds to a state where buttons 610 and 612-616 are displayed. The freehand drawing enabled state is entered on switching to a freehand drawing state or touch animation input state in response to an operation of the button 610 or 612 and then a setting operation. Further, the buttons 611 to 616 as shown in Fig. 6 may not be configured as a touch button but may be another type of display item for a setting relevant to the freehand drawing, such as an icon. For example, it may be modified such that if the selection frame is moved from any one of the display items of the buttons 611 to 616 to another display item in response to the selection operation of the operation key 107, a function of the selected display item can be executed by a determination operation of the operation key 107.

In this embodiment, a drawing mode is switched to a normal capture mode when the user touches the drawing mode end button 618 on the drawing input selection screen. However, the LCD panel may automatically exit a drawing mode to switch to a normal capture mode when it transits from a reversed/closed state to another state. That is, when the position of the LCD panel 112 is changed to a position other than the reversed/closed position, the display state shown in Fig. 6C changes to a different display state (for example, the display state shown in Fig. 6A).

To protect a photographing lens in touch operation, a lens cover serving as a lens protection unit may be controlled to be in a closed state (protection state) in a drawing mode. To prevent an incorrect operation from occurring, an input operation except for a touch operation may be prohibited in a drawing mode. For example, in the drawing mode, it may be assumed that the user presses the operation keys 107 provided with the main body 114 by mistake because a gripping force for gripping the main body by a user's hand hands becomes greater in order to hold the main body against a writing pressure added to the main body 114 by the drawing (touch) operation on the display surface. To prevent such an unintended operation, it is desirable to disable any operations by the operation keys 107 except for the touch operation during the drawing mode. Alternatively, it is more effective to disable some of operations of the operation keys 107 arranged within a distance range capable of operating by the user's hand instead of disabling all operation keys 107.

In step S901 described above, if switching to a drawing mode is performed in response not to a change in position of the display unit 113 but a switching instruction from the user in step S803, guidance display may be performed to encourage the user to move the display unit 113 to a reversed/closed state. This can prompt the user to perform freehand drawing in a more stable state. Furthermore, by moving the display unit 113 to a reversed/closed state in a normal capture mode, a guidance indicating that a drawing mode is to start may be displayed. This means that it is possible to switch to a drawing mode by only moving the display unit 113 without performing an operation of switching to a drawing mode from the FUNC menu. The frequency at which the user switches to a drawing mode by reversing and closing the display unit 113 increases, thereby naturally enabling freehand drawing in a more stable state.

In this embodiment, a case in which the LCD panel switches to a drawing mode when its state is changed to a reversed/closed state has been described because the grip portion 115 is provided on one side of the main body 114 on the other side of which the touch panel 108 is arranged. The present invention, however, is not limited to this. It is possible to obtain the same effects even in another positional relationship as long as the LCD panel switches to a drawing mode when the display unit is moved to have a positional relationship such that the display surface of the display unit is arranged at a touchable position and the body supports the display unit not to be moved by a force applied to the display surface in the direction substantially perpendicular to the display surface by a touch input operation. Even if there is no grip portion, for example, when the display unit has the above-described positional relationship with respect to the body placed on a desk or ground in a stable state, the body can support the display unit so that a force acting on the display surface in the direction substantially perpendicular to the display surface by a touch input operation does not move the display unit. This makes it possible to realize stable freehand drawing.

The example of the processing in a capture standby mode has been explained. The present invention is applicable even if a drawing mode starts in another operation mode such as a capturing mode or a reproduction mode.

### [Second Embodiment]

In the first embodiment, a case in which the LCD panel switches to a drawing mode including a freehand drawing state and touch animation input state when it is reversed and closed has been described above. The present invention, however, is not limited to this.

In the second embodiment, a freehand drawing enabled state and a touch animation input enabled state are explained as different drawing modes. That is, in this embodiment, a freehand drawing mode and a touch animation input mode are provided as drawing modes. A prepared configuration except for the definition of a drawing mode is the same as that in the first embodiment.

A different part from the first embodiment is mode switching processing in step S808 when an LCD panel 112 is reversed and closed. In the second embodiment, when the LCD panel 112 is reversed and closed, it switches to a drawing mode but does not switch to a touch animation input mode. A reason for this is as follows.

The purpose of freehand drawing is to draw characters such as a capture date/time and the location/name of an object. In contrast to this, touch animation input is used to add effects around an object or to the whole screen. The touch animation input mode, therefore, requires low touch input accuracy as compared with the freehand drawing mode, and does not necessarily require a state (reversed/closed state) in which the LCD panel is stable. Furthermore, if the user draws characters by freehand drawing during a capturing operation, characters are recorded only halfway through. Freehand drawing, therefore, may be used as preparatory drawing before a capturing operation. Freehand drawing preparatory to a capturing operation has no operative problem in a reversed/closed state which is unsuitable for a capturing operation.

The reason why a reversed/closed state is unsuitable for a capturing operation is that the direction in which the user is looking is different from the capturing direction of the camera unit 101 and the user cannot see an object, as shown in Fig. 4B. On the other hand, touch animation input for adding video effects around an object or to the whole screen during a capturing operation needs to be operated during a capturing operation. In this case, therefore, the user needs to see not only an object but also the LCD panel 112 as shown in Fig. 4A, and thus a reversed/closed state is not suitable.

According to the second embodiment, when the LCD panel 112 is reversed and closed in a normal capture mode, it switches to a drawing mode to enter a freehand drawing enabled state. As described above, a reversed/closed state in which the touch panel 108 is stable is suitable for freehand drawing.

For these reasons, in the second embodiment, when the LCD panel 112 is reversed and closed, it switches to a drawing mode but does not switch to a touch animation input mode.

In the second embodiment, it is also possible to switch to a drawing mode without an extra load, and perform operation in a state suitable for freehand drawing. In addition, when the LCD panel is reversed and closed, it does not transit to a touch animation input mode, thereby omitting unnecessary mode switching.

One hardware component may execute the above-described control processing, or a plurality of hardware components may share the processing, thereby controlling the apparatus as a whole.

In each embodiment described above, a case in which the present invention is applied to a digital video camera has been exemplified. The present invention is not limited to this, and is applicable to any apparatus having a mode in which freehand drawing is possible. That is, the present invention is applicable to any apparatus in which a touch panel capable of performing freehand drawing and a body to be gripped by the user can move with respect to each other. In this case, it is possible to obtain the same effects by switching to a freehand drawing mode in response to detecting that the display unit has been moved to have a positional relationship such that the display surface of the display unit is arranged at a touchable position and the body supports the display unit not to be unstable by pressure applied by a touch input operation. Examples of an apparatus to which the present invention is applicable are, for example, a personal computer, a PDA, a portable telephone, a potable image viewer, a printer apparatus including a display, a digital photo frame, a music player, a game machine, an electronic book reader, and the like.

### [Other Embodiments]

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

## Claims

1. A display control apparatus, comprising:
display means (113) including a touch panel type display device movable in an opening/closing direction and upside-down reverse direction with respect to a body (114);
detection means (106) for detecting a positional relationship of the display means with respect to the body (114);
capturing means (101) for capturing an object image imaged via a photographing lens; and
recording means for recording, in a recording medium (105), video data captured by the capturing means;
**characterized in** the display control apparatus further comprising:
drawing means for drawing a display object based on coordinates touched in freehand drawing as a touch operation on the display device;
control means (109) configured to switch from an operation mode in which a touch-operable touch button (606, 607, 608) is displayed on the display device and in which it is possible to receive a touch operation for the touch button to an operation mode in which a user can perform freehand drawing in the case that the positional relationship is changed from an open state in which the display means (113) is opened in the opening/closing direction with respect to the body (114) to a reversed/closed state in which the display means is rotated in the upside-down reverse direction and closed in the opening/closing direction, such that a display surface of the display means (113) is exposed, wherein during recording of video data by the recording means, the control means (109) is configured to not switch to the operation mode in which the user can perform freehand drawing if the detection means (106) detects that the positional relationship is changed to the reversed/closed state, and during recording standby of video data, the control means (109) is configured to switch to the operation mode in which the user can perform freehand drawing if the detection means (106) detects that the positional relationship is changed to the reversed/closed state.

2. The apparatus according to claim 1, wherein in the case that the positional relationship is changed to the reversed/closed state, the control means (109) is configured to switch a display state of the display device from a first display state including the touch-operable touch button to a second display state including a display item (611) for a setting relevant to the freehand drawing.

3. The apparatus according to claim 2, wherein in the second display state, the control means (109) is configured to display a freehand drawing enabled area (617), on the display surface of the display device.

4. The apparatus according to claim 2 or 3, wherein in the second display state, when a touch input operation is performed in the freehand drawing enabled area (617), the display item (611) is controlled not to be displayed.

5. The apparatus according to any one of claims 2 to 4, wherein if, in the second display state, the detection means (106) detects that the reversed/closed state has been changed to another positional relationship, the control means (109) is configured to control to continue to display the second display state.

6. The apparatus according to any one of claims 2 to 4, wherein if, in the second display state, the detection means detects that the reversed/closed state has been changed to another positional relationship, the control means (109) is configured to switch from the second display state to another display state.

7. The apparatus according to any one of claims 2 to 6, wherein the display item (611) for a setting relevant to the freehand drawing is a display item for displaying at least one of an option of a pen or stamp shape in the freehand drawing, an option of color of a display object to be drawn by the freehand drawing, and an option of erasing a display object drawn by the freehand drawing.

8. The apparatus according to any one of claims 2 to 7, wherein when reproducing an image recorded in the recording medium (105), the control means (109) is configured to not switch to the second display state if the detection means detects that the positional relationship is changed to the reversed/closed state.

9. The apparatus according to any one of claims 1 to 8, wherein the reversed/closed state indicates a state in which a display surface of the display means (113) faces away from the body (114) and a rear surface of the display means (113) faces the body (114).

10. The apparatus according to claim 9, wherein the apparatus is a portable apparatus, and has a grip portion (115) for the user to hold the body.

11. The apparatus according to claim 10, wherein, in the reversed/closed state, the grip portion (115) is arranged on one side of the body (114), the other side of which faces the rear surface of the display means (113), and wherein the grip portion is provided so that when the display means (113) is in the reversed/closed state, the user is able to support the body (114) such that a force acting on the display surface in the direction substantially perpendicular to the display surface does not move the display means (113).

12. The apparatus according to any one of claims 1 to 11, wherein the drawing means is configured to not receive an operation except for the touch operation during the freehand drawing,
the apparatus further comprising:
lens protection means for protecting the photographing lens,
wherein the lens protection means is set to a protection state in which the lens protection means covers the photographing lens for the freehand drawing.

13. A control method of a display control apparatus which includes display means (113) having a touch panel type display device movable in an opening/closing direction and upside-down reversed direction with respect to a body (114), capturing means (101) for capturing an object image imaged via a photographing lens, and recording means for recording, in a recording medium (105), video data captured by the capturing means, the method comprising:
a detection step of detecting a positional relationship of the display means with respect to the body (114); **characterized in that** said display control apparatus further includes drawing means for drawing a display object based on coordinates touched in freehand drawing as a touch operation for the display device, and **in that** said control method further comprises
a control step to switch from an operation mode in which a touch-operable touch button (606, 607, 608) is displayed on the display device and on which it is possible to receive a touch operation for the touch button to an operation mode in which a user can perform freehand drawing in the case that the positional relationship is changed from an open state in which the display means (113) is opened in the opening/closing direction with respect to the body (114) to a reversed/closed state in which the display means is rotated in the upside-down reverse direction and closed in the opening/closing direction, such that a display surface of the display means (113) is exposed, wherein the control step further comprises controlling, during recording of video data by the recording means, to not switch to the operation mode in which the user can perform freehand drawing in the case that it is detected that the positional relationship is changed to the reversed/closed state,
and controlling, during recording standby of video data, to switch to the operation mode in which the user can perform freehand drawing in the case that it is detected that the positional relationship is changed to the reversed/closed state.

14. A computer program comprising instructions to cause the display control apparatus according to anyone of claims 1 to 12 to execute the steps of the method of claim 13.

15. A computer-readable storage medium storing a program according to claim 14.

## Patentansprüche

1. Anzeigesteuerungsvorrichtung, umfassend:
eine Anzeigeeinrichtung (113), die eine Anzeigevorrichtung des Tastfeldtyps, die in einer Öffnungs-/Schließrichtung und einer in Bezug auf einen Körper (114) kopfstehend umgekehrten Richtung beweglich ist, beinhaltet;
eine Detektionseinrichtung (106) zum Detektieren einer Positionsbeziehung der Anzeigeeinrichtung in Bezug auf den Körper (114);
eine Erfassungseinrichtung (101) zum Erfassen eines durch ein Fotoobjektiv abgebildeten Objektbilds; sowie
eine Aufzeichnungseinrichtung zum Aufzeichnen von durch die Erfassungseinrichtung erfassten Videodaten in einem Aufzeichnungsmedium (105);
**dadurch gekennzeichnet, dass** die Anzeigesteuerungsvorrichtung ferner umfasst:
eine Zeicheneinrichtung zum Zeichnen eines Anzeigeobjekts basierend auf Koordinaten, die bei Freihandzeichnen als eine Berührungsbedienung auf der Anzeigevorrichtung berührt wurden; sowie
eine Steuerungseinrichtung (109), die konfiguriert ist, von einem Betriebsmodus, in dem ein berührungsbedienbarer Berührungsknopf (606, 607, 608) auf der Anzeigevorrichtung angezeigt wird und in dem es möglich ist, eine Berührungsbedienung für den Berührungsknopf zu empfangen, in einen Betriebsmodus umzuschalten, in dem ein Benutzer Freihandzeichnen durchführen kann, in dem Fall, dass die Positionsbeziehung von einem offenen Zustand, in dem die Anzeigeeinrichtung (113) in der Öffnungs-/Schließrichtung in Bezug auf den Körper (114) geöffnet ist, in einen umgekehrten/geschlossenen Zustand geändert wird, in dem die Anzeigeeinrichtung so in der kopfstehend umgekehrten Richtung gedreht und in der Öffnungs-/Schließrichtung geschlossen ist, dass eine Anzeigefläche der Anzeigeeinrichtung (113) freigelegt wird,
wobei die Steuerungseinrichtung (109) während eines Aufzeichnens von Videodaten durch die Aufzeichnungseinrichtung konfiguriert ist, nicht in den Betriebsmodus, in dem der Benutzer Freihandzeichnen durchführen kann, umzuschalten, falls die Detektionseinrichtung (106) detektiert, dass die Positionsbeziehung in den umgekehrten/geschlossenen Zustand geändert wird, und wobei die Steuerungseinrichtung (109) während einer Aufzeichnungsbereitschaft für Videodaten konfiguriert ist, in den Betriebsmodus, in dem der Benutzer Freihandzeichnen durchführen kann, umzuschalten, falls die Detektionseinrichtung (106) detektiert, dass die Positionsbeziehung in den umgekehrten/geschlossenen Zustand geändert wird.

2. Vorrichtung nach Anspruch 1, wobei in dem Fall, dass die Positionsbeziehung in den umgekehrten/geschlossenen Zustand geändert wird, die Steuerungseinrichtung (109) konfiguriert ist, einen Anzeigezustand der Anzeigevorrichtung von einem ersten Anzeigezustand, der den berührungsbedienbaren Berührungsknopf beinhaltet, in einen zweiten Anzeigezustand umzuschalten, der ein Anzeigeelement (611) für eine für das Freihandzeichnen relevante Einstellung beinhaltet.

3. Vorrichtung nach Anspruch 2, wobei im zweiten Anzeigezustand die Steuerungseinrichtung (109) konfiguriert ist, ein zum Freihandzeichnen freigegebenes Gebiet (617) auf der Anzeigefläche der Anzeigevorrichtung anzuzeigen.

4. Vorrichtung nach Anspruch 2 oder 3, wobei im zweiten Anzeigezustand, wenn eine Berührungseingabebedienung im zum Freihandzeichnen freigegebenen Gebiet (617) durchgeführt wird, das Anzeigeelement (611) so gesteuert wird, dass es nicht angezeigt wird.

5. Vorrichtung nach einem der Ansprüche 2 bis 4, wobei, falls die Detektionseinrichtung (106) im zweiten Anzeigezustand detektiert, dass der umgekehrte/geschlossene Zustand in eine andere Positionsbeziehung geändert worden ist, die Steuerungseinrichtung (109) konfiguriert ist, so zu steuern, dass der zweite Anzeigezustand weiterhin angezeigt wird.

6. Vorrichtung nach einem der Ansprüche 2 bis 4, wobei, falls die Detektionseinrichtung im zweiten Anzeigezustand detektiert, dass der umgekehrte/geschlossene Zustand in eine andere Positionsbeziehung geändert worden ist, die Steuerungseinrichtung (109) konfiguriert ist, vom zweiten Anzeigezustand in einen anderen Anzeigezustand umzuschalten.

7. Vorrichtung nach einem der Ansprüche 2 bis 6, wobei das Anzeigeelement (611) für eine für das Freihandzeichnen relevante Einstellung ein Anzeigeelement zum Anzeigen von wenigstens einem aus einer Option für eine Stift- oder Stempelform im Freihandzeichnen, einer Option für eine Farbe eines durch das Freihandzeichnen zu zeichnenden Anzeigeobjekts, und einer Option zum Löschen eines durch das Freihandzeichnen gezeichneten Anzeigeobjekts ist.

8. Vorrichtung nach einem der Ansprüche 2 bis 7, wobei beim Wiedergeben eines im Aufzeichnungsmedium (105) aufgezeichneten Bilds die Steuerungseinrichtung (109) konfiguriert ist, nicht in den zweiten Anzeigezustand umzuschalten, falls die Detektionseinrichtung detektiert, dass die Positionsbeziehung in den umgekehrten/geschlossenen Zustand geändert wird.

9. Vorrichtung nach einem der Ansprüche 1 bis 8, wobei der umgekehrte/geschlossene Zustand einen Zustand angibt, in dem eine Anzeigefläche der Anzeigeeinrichtung (113) dem Körper (114) abgewandt ist und eine Rückseite der Anzeigeeinrichtung (113) dem Körper (114) zugewandt ist.

10. Vorrichtung nach Anspruch 9, wobei die Vorrichtung eine tragbare Vorrichtung ist und einen Griffabschnitt (115) aufweist, damit der Benutzer den Körper halten kann.

11. Vorrichtung nach Anspruch 10,
wobei im umgekehrten/geschlossenen Zustand der Griffabschnitt (115) auf einer Seite des Körpers (114) angeordnet ist, dessen andere Seite der Rückseite der Anzeigeeinrichtung (113) zugewandt ist, und
wobei der Griffabschnitt so bereitgestellt ist, dass, wenn die Anzeigeeinrichtung (113) im umgekehrten/geschlossenen Zustand ist, der Benutzer in der Lage ist, den Körper (114) so zu stützen, dass eine Kraft, die auf die Anzeigefläche in der im Wesentlichen senkrechten Richtung zur Anzeigefläche einwirkt, die Anzeigeeinrichtung (113) nicht bewegt.

12. Vorrichtung nach einem der Ansprüche 1 bis 11, wobei die Zeicheneinrichtung konfiguriert ist, während des Freihandzeichnens außer der Berührungsbedienung keine Bedienung zu empfangen, und
wobei die Vorrichtung ferner umfasst:
eine Objektivschutzeinrichtung zum Schützen des Fotoobjektivs,
wobei die Objektivschutzeinrichtung in einen Schutzzustand eingestellt wird, in dem die Objektivschutzeinrichtung das Fotoobjektiv für das Freihandzeichnen bedeckt.

13. Steuerverfahren für eine Anzeigesteuerungsvorrichtung, die eine Anzeigeeinrichtung (113) mit einer in einer Öffnungs-/Schließrichtung und einer in Bezug auf einen Körper (114) kopfstehend umgekehrten Richtung beweglichen Anzeigevorrichtung des Tastfeldtyps, eine Erfassungseinrichtung (101) zum Erfassen eines durch ein Fotoobjektiv abgebildeten Objektbilds und eine Aufzeichnungseinrichtung zum Aufzeichnen von durch die Erfassungseinrichtung erfassten Videodaten in einem Aufzeichnungsmedium (105) beinhaltet, wobei das Verfahren umfasst:
einen Detektionsschritt zum Detektieren einer Positionsbeziehung der Anzeigeeinrichtung in Bezug auf den Körper (114);
**dadurch gekennzeichnet, dass** die Anzeigesteuerungsvorrichtung ferner eine Zeicheneinrichtung zum Zeichnen eines Anzeigeobjekts basierend auf Koordinaten, die bei Freihandzeichnen als eine Berührungsbedienung für die Anzeigevorrichtung berührt wurden, beinhaltet, und dadurch dass das Steuerverfahren ferner umfasst:
einen Steuerungsschritt, um von einem Betriebsmodus, in dem ein berührungsbedienbarer Berührungsknopf (606, 607, 608) auf der Anzeigevorrichtung angezeigt wird und auf der es möglich ist, eine Berührungsbedienung für den Berührungsknopf zu empfangen, in einen Betriebsmodus umzuschalten, in dem ein Benutzer Freihandzeichnen durchführen kann, in dem Fall, dass die Positionsbeziehung von einem offenen Zustand, in dem die Anzeigeeinrichtung (113) in der Öffnungs-/Schließrichtung in Bezug auf den Körper (114) geöffnet ist, in einen umgekehrten/geschlossenen Zustand geändert wird, in dem die Anzeigeeinrichtung so in der kopfstehend umgekehrten Richtung gedreht und in der Öffnungs-/Schließrichtung geschlossen ist, dass eine Anzeigefläche der Anzeigeeinrichtung (113) freigelegt wird,
wobei der Steuerungsschritt ferner ein Steuern während eines Aufzeichnens von Videodaten durch die Aufzeichnungseinrichtung umfasst, um nicht in den Betriebsmodus umzuschalten, in dem der Benutzer Freihandzeichnen durchführen kann, falls detektiert wird, dass die Positionsbeziehung in den umgekehrten/geschlossenen Zustand geändert wird, sowie
ein Steuern während einer Aufzeichnungsbereitschaft für Videodaten, um in den Betriebsmodus umzuschalten, in dem der Benutzer Freihandzeichnen durchführen kann, falls detektiert wird, dass die Positionsbeziehung in den umgekehrten/geschlossenen Zustand geändert wird.

14. Computerprogramm, das Befehle umfasst, um die Anzeigesteuerungsvorrichtung nach einem der Ansprüche 1 bis 12 zu veranlassen, die Schritte des Verfahrens von Anspruch 13 auszuführen.

15. Computerlesbares Speichermedium, das ein Programm nach Anspruch 14 speichert.

## Revendications

1. Appareil de commande d'affichage, comprenant :
un moyen d'affichage (113) comprenant un dispositif d'affichage de type écran tactile mobile dans une direction d'ouverture/fermeture et dans une direction retournée inversée par rapport à un corps (114) ;
un moyen de détection (106) destiné à détecter une relation de position du moyen d'affichage par rapport au corps (114) ;
un moyen de capture (101) destiné à capturer une image d'objet mis en image par le biais d'une lentille de photographie ; et
un moyen d'enregistrement destiné à enregistrer, dans un support d'enregistrement (105), des données vidéo capturées par le moyen de capture ;
l'appareil de commande d'affichage étant **caractérisé en ce qu'**il comprend en outre :
un moyen de dessin permettant de dessiner un objet d'affichage sur la base de coordonnées touchées lors d'un dessin à main levée en tant qu'opération de toucher sur le dispositif d'affichage ;
un moyen de commande (109) configuré pour commuter d'un mode de fonctionnement, dans lequel un bouton de toucher pouvant être mis en œuvre par un toucher (606, 607, 608) est affiché sur le dispositif d'affichage et dans lequel il est possible de recevoir une opération de toucher du bouton de toucher, à un mode de fonctionnement dans lequel un utilisateur peut exécuter un dessin à main levée dans le cas d'un passage de la relation de position d'un état ouvert, dans lequel le moyen d'affichage (113) est ouvert dans la direction d'ouverture/fermeture par rapport au corps (114), à un état retourné/fermé dans lequel le moyen d'affichage a été tourné dans la direction retournée inversée et est fermé dans la direction d'ouverture/fermeture, de façon à exposer une surface d'affichage du moyen d'affichage (113),
dans lequel, pendant un enregistrement de données vidéo par le moyen d'enregistrement, le moyen de commande (109) est configuré pour ne pas commuter vers le mode de fonctionnement dans lequel l'utilisateur peut exécuter un dessin à main levée si le moyen de détection (106) détecte un passage de la relation de position à l'état retourné/fermé et, pendant une attente d'enregistrement de données vidéo, le moyen de commande (109) est configuré pour commuter vers le mode de fonctionnement dans lequel l'utilisateur peut exécuter un dessin à main levée si le moyen de détection (106) détecte un passage de la relation de position à l'état retourné/fermé.

2. Appareil selon la revendication 1, dans lequel, dans le cas dans lequel la relation de position est passée à l'état retourné/fermé, le moyen de commande (109) est configuré pour commuter un état d'affichage du dispositif d'affichage d'un premier état d'affichage comprenant le bouton de toucher pouvant être mis en œuvre par un toucher à un second état d'affichage comprenant un élément d'affichage (611) permettant un réglage associé au dessin à main levée.

3. Appareil selon la revendication 2, dans lequel, dans le second état d'affichage, le moyen de commande (109) est configuré pour afficher une zone activée (617) de dessin à main levée, sur la surface d'affichage du dispositif d'affichage.

4. Appareil selon la revendication 2 ou 3, dans lequel, dans le second état d'affichage, lors de l'exécution d'une opération d'entrée de toucher dans la zone activée (617) de dessin à main levée, l'élément d'affichage (611) est commandé de façon à ne pas être affiché.

5. Appareil selon l'une quelconque des revendications 2 à 4, dans lequel, si, dans le second état d'affichage, le moyen de détection (106) détecte que l'état retourné/fermé est passé à une autre relation de position, le moyen de commande (109) est configuré pour commander le fait de continuer à afficher le second état d'affichage.

6. Appareil selon l'une quelconque des revendications 2 à 4, dans lequel, si, dans le second état d'affichage, le moyen de détection détecte que l'état retourné/fermé est passé à une autre relation de position, le moyen de commande (109) est configuré pour commuter du second état d'affichage à un autre état d'affichage.

7. Appareil selon l'une quelconque des revendications 2 à 6, dans lequel l'élément d'affichage (611) permettant un réglage associé au dessin à main levée est un élément d'affichage destiné à afficher au moins l'une d'une option d'un crayon ou d'une forme d'estampille dans le dessin à main levée, d'une option de couleur d'un objet d'affichage à dessiner par le dessin à main levée, et d'une option d'effacement d'un objet d'affichage dessiné par le dessin à main levée.

8. Appareil selon l'une quelconque des revendications 2 à 7, dans lequel, lors d'une reproduction d'une image enregistrée dans le support d'enregistrement (105), le moyen de commande (109) est configuré pour ne pas commuter vers le second état d'affichage si le moyen de détection détecte que la relation de position est passée à l'état retourné/fermé.

9. Appareil selon l'une quelconque des revendications 1 à 8, dans lequel l'état retourné/fermé indique un état dans lequel une surface d'affichage du moyen d'affichage (113) est orientée à l'opposé corps (114) et une surface arrière du moyen d'affichage (113) fait face au corps (114) .

10. Appareil selon la revendication 9, l'appareil étant un appareil portatif et comportant une partie de préhension (115) permettant à l'utilisateur de tenir le corps.

11. Appareil selon la revendication 10, dans lequel, dans l'état retourné/fermé, la partie de préhension (115) est disposée d'un côté corps (114), dont l'autre côté fait face à la surface arrière du moyen d'affichage (113),
et dans lequel la partie de préhension est disposée de sorte que, lorsque le moyen d'affichage (113) est dans l'état retourné/fermé, l'utilisateur puisse supporter le corps (114) de sorte qu'une force agissant sur la surface d'affichage dans la direction sensiblement perpendiculaire à la surface d'affichage ne déplace pas le moyen d'affichage (113).

12. Appareil selon l'une quelconque des revendications 1 à 11, dans lequel le moyen de dessin est configuré pour ne pas recevoir d'opération à l'exception de l'opération de toucher pendant le dessin à main levée,
l'appareil comprenant en outre :
un moyen de protection de lentille destiné à protéger la lentille de photographie,
dans lequel le moyen de protection de lentille est placé dans un état de protection dans lequel le moyen de protection de lentille recouvre la lentille de photographie pendant le dessin à main levée.

13. Procédé de commande d'un appareil de commande d'affichage comprenant un moyen d'affichage (113) comportant un dispositif d'affichage de type écran tactile mobile dans une direction d'ouverture/fermeture et dans une direction retournée inversée par rapport à un corps (114), un moyen de capture (101) destiné à capturer une image d'objet mis en image par le biais d'une lentille de photographie, et un moyen d'enregistrement destiné à enregistrer, dans un support d'enregistrement (105), des données vidéo capturées par le moyen de capture, le procédé comprenant :
une étape de détection consistant à détecter une relation de position du moyen d'affichage par rapport au corps (114) ;
**caractérisé en ce que** ledit appareil de commande d'affichage comprend en outre un moyen de dessin permettant de dessiner un objet d'affichage sur la base de coordonnées touchées lors d'un dessin à main levée en tant qu'opération de toucher du dispositif d'affichage, et **en ce que** le procédé de commande comprend en outre
une étape de commande consistant à commuter d'un mode de fonctionnement, dans lequel un bouton de toucher pouvant être mis en œuvre par un toucher (606, 607, 608) est affiché sur le dispositif d'affichage et sur lequel il est possible de recevoir une opération de toucher du bouton de toucher, à un mode de fonctionnement dans lequel un utilisateur peut exécuter un dessin à main levée dans le cas dans lequel la relation de position est passée d'un état ouvert, dans lequel le moyen d'affichage (113) est ouvert dans la direction d'ouverture/fermeture par rapport au corps (114), à un état retourné/fermé dans lequel le moyen d'affichage a été tourné dans la direction retournée inversée et fermé dans la direction d'ouverture/fermeture, de façon à exposer une surface d'affichage du moyen d'affichage (113),
dans lequel l'étape de commande consiste en outre à commander, pendant un enregistrement de données vidéo par le moyen d'enregistrement, le fait de ne pas commuter vers le mode de fonctionnement dans lequel l'utilisateur peut exécuter un dessin à main levée dans le cas dans lequel il est détecté que la relation de position est passée à l'état retourné/fermé,
et à commander, pendant une attente d'enregistrement de données vidéo, le fait de commuter vers le mode de fonctionnement dans lequel l'utilisateur peut exécuter un dessin à main levée dans le cas dans lequel il est détecté que la relation de position est passée à l'état retourné/fermé.

14. Programme informatique comprenant des instructions pour amener un appareil de commande d'affichage selon l'une quelconque des revendications 1 à 12 à exécuter les étapes du procédé selon la revendication 13.

15. Support d'informations lisible par ordinateur contenant en mémoire un programme selon la revendication 14.
